# EUROPEAN PATENT APPLICATION

(11) **EP 4 768 368 A1**
(43) Date of publication of application: **01.07.2026**
(21) Application number: 25218117.7
(22) Date of filing: 24.11.2025
(51) Int. Cl.: B62D 25/08, B62D 29/00

(54) **VEHICLE FRAME STRUCTURE**

(30) Priority: 11.12.2024 JP 2024216981
(71) Applicant: Toyota Jidosha Kabushiki Kaisha, Toyota-shi, Aichi-ken 471-8571 (JP)
(72) Inventor: HASHIDA, Shigenori, TOYOTA-SHI, AICHI-KEN, 471-8571 (JP); NODA, Kohei, TOYOTA-SHI, AICHI-KEN, 471-8571 (JP)
(74) Representative: Cabinet Beau de Loménie

(57) **Abstract**

A vehicle frame structure integrally formed by casting, the vehicle frame structure configured to include: a left and right pair of frame members that are provided in a rear portion of a vehicle and in vehicle width direction side portions thereof, extend in the vehicle front and rear direction, and each have a mounting member to which a suspension member is mounted; a crossmember component that extends in the vehicle width direction, has both vehicle width direction end portions thereof connected to the pair of mounting members, and has a rear wall portion that configures an end portion of the crossmember component on the vehicle rear side, with at least the rear wall portion being convexly curved in the vehicle forward direction; and a first rib that connects the vehicle width direction end portions of the crossmember component to the curved rear wall portion along the vehicle width direction.

## Description

### BACKGROUND

### Technical Field

This disclosure relates to a vehicle frame structure.

### Related Art

Japanese Patent Application Laid-open (JP-A) No. 2011-143881 discloses a technology relating to a lower structure of a vehicle rear portion. In this related art, a luggage compartment is provided between a left and right pair of rear side members in the vehicle rear portion, and on the vehicle front side of the luggage compartment, both end portions of a rear crossmember extending in the vehicle width direction are connected to the left and right pair of rear side members.

Here, since upward loads from suspension members are transmitted to frame members such as side members to which the suspension members are connected, the upward loads are transmitted to the crossmember connected to the frame members.

### SUMMARY

Integrally forming frame members such as side members with a crossmember (hereinafter called a "crossmember component") by casting is being considered. However, in some vehicles, the crossmember component is configured to have a curved shape along the vehicle front and rear direction to avoid interference with parts installed in the lower portion of the vehicle. In this case, compared with a case where the crossmember component is linearly formed, torsional rigidity is reduced in the crossmember component with respect to the upward loads transmitted from the suspension members, which may adversely affect handling and stability when the vehicle is traveling.

In consideration of the above circumstances, it is an object of this disclosure to obtain a vehicle frame structure that can inhibit torsion of the crossmember component and improve handling and stability when the vehicle is traveling.

A vehicle frame structure pertaining to a first aspect is a vehicle frame structure integrally formed by casting, the vehicle frame structure configured to include: a left and right pair of frame members that are provided at a rear portion of a vehicle and in vehicle width direction side portions , that extend in the vehicle front-rear direction, and that each have an attachment part to which a suspension member is attached; a crossmember component that extends in the vehicle width direction, that has respective vehicle width direction end portions thereof connected to the respective attachment parts, and that has a rear wall portion that configures an end portion of the crossmember component at the vehicle rear side, with at least the rear wall portion being convexly curved in the vehicle forward direction; and a first rib that connects the vehicle width direction end portions of the crossmember component to the curved rear wall portion along the vehicle width direction.

The vehicle frame structure pertaining to the first aspect is integrally formed by casting and is configured to include the left and right pair of frame members, the crossmember component, and the first rib. The left and right pair of frame members are provided in the rear portion of the vehicle and in vehicle width direction side portions thereof, extend in the vehicle front and rear direction, and each have an attachment part to which a suspension member is attached. Furthermore, the crossmember component extends in the vehicle width direction, has respective vehicle width direction end portions thereof connected to the respective attachment part s, and has the rear wall portion that configures the end portion of the crossmember component at the vehicle rear side, with at least the rear wall portion being convexly curved in the vehicle forward direction. Moreover, the first rib connects the vehicle width direction end portions of the crossmember component to the curved rear wall portion along the vehicle width direction.

In this way, in this aspect, because the crossmember component is provided with the first rib that connects the vehicle width direction end portions of the crossmember component to the curved rear wall portion in the vehicle width direction, the rigidity of the crossmember component itself improves, thereby inhibiting torsion of the crossmember component. Furthermore, because the crossmember component connected to the attachment parts for the suspension members is provided with the first rib, the first rib is further added as a transmission path for upward loads when the vehicle is traveling.

Because of the above configuration, in this aspect, loads transmitted to the crossmember component are dispersed, and as a result it becomes possible to further inhibit torsion of the crossmember component. That is, in this aspect, torsional rigidity when the vehicle is traveling can be effectively enhanced even in the curved crossmember component, and handling and stability when the vehicle is traveling can be improved.

It will be noted that, in regard to "the vehicle width direction end portions of the crossmember component" being "connected to the mounting members" here, it suffices for at least parts of the vehicle width direction end portions of the crossmember component to overlap the mounting members as viewed from the vehicle width direction. For this reason, it is not invariably necessary for the vehicle width direction end portions of the crossmember component to be directly connected to the mounting members.

Furthermore, the "first rib" here can be provided on the inner surface side or the outer surface side of the crossmember component in a case where, for example, the cross-sectional shape of the crossmember component is an open cross-section, but in a case where the cross-sectional shape is a closed cross-section, the first rib is provided on the outer surface side of the crossmember component.

A vehicle frame structure pertaining to a second aspect is the vehicle frame structure pertaining to the first aspect, wherein the crossmember component has an open cross-sectional shape that is opens toward one of a vehicle upward direction or a vehicle downward directions, and the first rib extends along the vehicle width direction inside the crossmember component.

In the vehicle frame structure pertaining to the second aspect, the crossmember component has an open cross-sectional shape that opens toward one of the vehicle upward direction or a vehicle downward directions, and the first rib extends along the vehicle width direction inside the crossmember component and connects the vehicle width direction end portions of the crossmember component to the rear wall portion along the vehicle width direction.

For this reason, in the vehicle frame structure pertaining to the second aspect, when upward loads act when the vehicle is traveling, the open cross-section of the crossmember component is inhibited from opening (the angle formed by the far wall portion and the rear wall portion of the crossmember component is inhibited from becoming obtuse) due to distortion of the rear wall portion of the crossmember component, thus contributing to handling and stability when the vehicle is traveling. It will be noted that the crossmember component has an open cross-sectional shape whose vehicle upper side is open or an open cross-sectional shape whose vehicle lower side is open.

A vehicle frame structure pertaining to a third aspect is the vehicle frame structure pertaining to the first aspect or the second aspect, wherein the first rib is connected at the vehicle width direction end portions of the crossmember component at a front wall portion that configures an end portion of the crossmember component on the vehicle front side.

In the vehicle frame structure pertaining to the third aspect, the first rib is connected at the vehicle width direction end portions of the crossmember component at the front wall portion configuring the end portion of the crossmember component at the vehicle front side, so the first rib bridges the front wall portion and the rear wall portion of the crossmember component. Because of this, in this aspect, the rigidity of the crossmember component itself further improves, and the open cross-section of the crossmember component is more effectively inhibited from opening.

A vehicle frame structure pertaining to a fourth aspect is the vehicle frame structure pertaining to any one of the first aspect to the third aspect, wherein the first rib is formed continuously along the vehicle width direction, is connected at both vehicle width direction end portions thereof to the front wall portion, and is connected at a vehicle width direction intermediate portion thereof to the rear wall portion.

In the vehicle frame structure pertaining to the fourth aspect, the first rib is formed continuously along the vehicle width direction, is connected at both vehicle width direction end portions thereof to the front wall portion, and is connected at the vehicle width direction intermediate portion thereof to the rear wall portion. In this way, because the first rib is formed continuously along the vehicle width direction, it becomes possible to further improve the rigidity of the crossmember component along the vehicle width direction compared with a case where the first rib is cut in the vehicle width direction.

A vehicle frame structure pertaining to a fifth aspect is the vehicle frame structure pertaining to any one of the first aspect to the fourth aspect, wherein a plurality of second ribs that interconnect a front wall portion configuring an end portion of the crossmember component on the vehicle front side and the rear wall portion at substantially the shortest distance therebetween are provided along the vehicle width direction.

In the vehicle frame structure pertaining to the fifth aspect, the plurality of second ribs that interconnect the front wall portion configuring the end portion of the crossmember component at the vehicle front side and the rear wall portion configuring the end portion of the crossmember component on the vehicle rear side at substantially the shortest distance therebetween are provided along the vehicle width direction, so compared with a case where the second ribs are not provided, it becomes possible to more effectively inhibit the open cross-section of the crossmember component from opening.

A vehicle frame structure pertaining to a sixth aspect is the vehicle frame structure pertaining to any one of the first aspect to the fifth aspect, wherein third ribs are provided that interconnect a front wall portion configuring an end portion of the crossmember component at the vehicle front side and the rear wall portion a truss arrangement.

In the vehicle frame structure pertaining to the sixth aspect, the third ribs that interconnect the front wall portion configuring the end portion of the crossmember component on the vehicle front side and the rear wall portion configuring the end portion of the crossmember component on the vehicle rear side in the manner of a truss are provided, so compared with a case where the third ribs are not provided, it becomes possible to more effectively inhibit the open cross-section of the crossmember component from opening.

Here, in the vehicle frame structure pertaining to the third aspect, because the third ribs are connected in the manner of a truss, it becomes possible to further improve the rigidity of the crossmember component with respect to loads along the vehicle front and rear direction and to transmit, via the third ribs along the vehicle width direction, an impact load input from the vehicle rear side.

A vehicle frame structure pertaining to a seventh aspect is the vehicle frame structure pertaining to the fifth aspect, wherein vehicle front-rear direction center portions of the second ribs are lower than respective vehicle front-rear direction end portion sides of the second ribs.

In the vehicle frame structure pertaining to the second aspect, the vehicle front-rear direction center portions of the second ribs are lower than respective vehicle front-rear direction end portion sides of the second ribs. Because of this, it becomes possible to improve cooling efficiency when forming the vehicle frame structure compared with a case where the second ribs are formed at the same height along the vehicle front-rear direction.

A vehicle frame structure pertaining to an eighth aspect is the vehicle frame structure pertaining to the any one of the first aspect to the seventh aspect, wherein the crossmember component is disposed at the front side of a spare tire housing provided in a lower portion of the vehicle.

Sometimes the rear portion of a vehicle is provided with a spare tire housing, and in this case, the spare tire housing is formed to match the shape of the spare tire, so a substantially cylindrical recess is formed, and the front side of the spare tire housing has the shape of a circular arc in plan view.

In the vehicle frame structure pertaining to the eighth aspect, the crossmember component is disposed at the front side of the spare tire housing provided in the vehicle lower portion and can be curved to match the shape of the spare tire housing and to avoid interference with the spare tire housing.

In the first aspect, torsional rigidity when the vehicle is traveling can be effectively enhanced even in the curved crossmember component, and handling and stability when the vehicle is traveling can be improved, so it becomes possible to dispose the curved crossmember component on the front side of the spare tire housing provided in the vehicle lower portion. Because of this, in the vehicle frame structure pertaining to the eighth aspect, it becomes possible to improve handling and stability when the vehicle is traveling and at the same time streamline the layout of the vehicle lower portion.

Here, as a vehicle frame structure pertaining to a ninth aspect, a vehicle frame structure integrally formed by casting may be configured to include: a left and right pair of frame members that are provided in a rear portion of a vehicle and in vehicle width direction side portions thereof, are disposed on inner sides of left and right rear wheel wells, and extend in the vehicle front and rear direction; a crossmember component that intercouples the left and right rear wheel wells and has a rear wall portion that configures an end portion of the crossmember component on the vehicle rear side, with at least the rear wall portion being convexly curved in the vehicle forward direction; and a first rib that connects vehicle width direction end portions of the crossmember component to the curved rear wall portion along the vehicle width direction.

Because of this, in the vehicle frame structure pertaining to the ninth aspect, the torsional rigidity of the crossmember component that intercouples the left and right wheel wells improves, and it becomes possible to improve handling and stability when the vehicle is traveling.

Furthermore, as a vehicle frame structure pertaining to a tenth aspect, a vehicle frame structure integrally formed by casting may be configured to include: a pair of frame members that are provided in a rear portion of a vehicle and in vehicle width direction side portions thereof, extend in the vehicle front and rear direction, and have inclined portions that extend obliquely inward in the vehicle width direction heading in the vehicle rearward direction; a crossmember component that extends in the vehicle width direction, has both vehicle width direction end portions thereof connected to the inclined portions, and has a rear wall portion that configures an end portion of the crossmember component on the vehicle rear side, with at least the rear wall portion being convexly curved in the vehicle forward direction; and a first rib that connects the vehicle width direction end portions of the crossmember component to the curved rear wall portion along the vehicle width direction.

Because of this, in the vehicle frame structure pertaining to the tenth aspect, torsional rigidity improves due to the first rib that connects the vehicle width direction end portions of the crossmember component, which are connected to mounting members for suspension members, to the rear wall portion of the crossmember component that is convex in the vehicle forward direction, and it becomes possible to improve handling and stability when the vehicle is traveling.

As described above, the vehicle frame structure pertaining to the disclosure can inhibit torsional rigidity of the crossmember component and improve handling and stability when the vehicle is traveling.

### BRIEF DESCRIPTION OF THE DRAWINGS

An exemplary embodiment of the present disclosure will be described in detail based on the following figures, wherein:
FIG. 1 is a bottom view of a vehicle rear portion to which a vehicle frame structure pertaining to the embodiment has been applied;
FIG. 2 is a bottom view, corresponding to FIG. 1, showing example modification 1;
FIG. 3 is an enlarged perspective view of main parts showing the shape of second ribs configuring part of the vehicle frame structure pertaining to example modification 1;
FIG. 4 is a bottom view, corresponding to FIG. 1, showing example modification 2;
FIG. 5A to FIG. 5E are bottom views schematically showing configurations of the first rib configuring part of the vehicle frame structure pertaining to the embodiment and example modifications;
FIG. 6 is a bottom view, corresponding to FIG. 1, showing example modification 3;
FIG. 7A to FIG. 7C are bottom views schematically showing the shapes of crossmember components configuring a part of the vehicle frame structure pertaining to the embodiment and example modifications; and
FIG. 8 is a schematic cross-sectional view taken along line A-A of FIG. 1.

### DETAILED DESCRIPTION

A vehicle frame structure pertaining to an embodiment of the disclosure will now be described. It will be noted that arrow FR shown as appropriate in the drawings indicates a forward direction in a vehicle front and rear direction, arrow RH indicates a vehicle rightward direction, and arrow UP indicates an upward direction in a vehicle up and down direction. Hereinafter, when description is given simply using the directions of front/rear, left/right, and upper/lower, unless otherwise noted these will refer to front/rear in the vehicle front and rear direction, left/right in the vehicle left and right direction (vehicle width direction), and upper/lower in the vehicle up and down direction.

### <Configuration of Vehicle Frame Structure>

First, the configuration of the vehicle frame structure pertaining to the embodiment will be described.

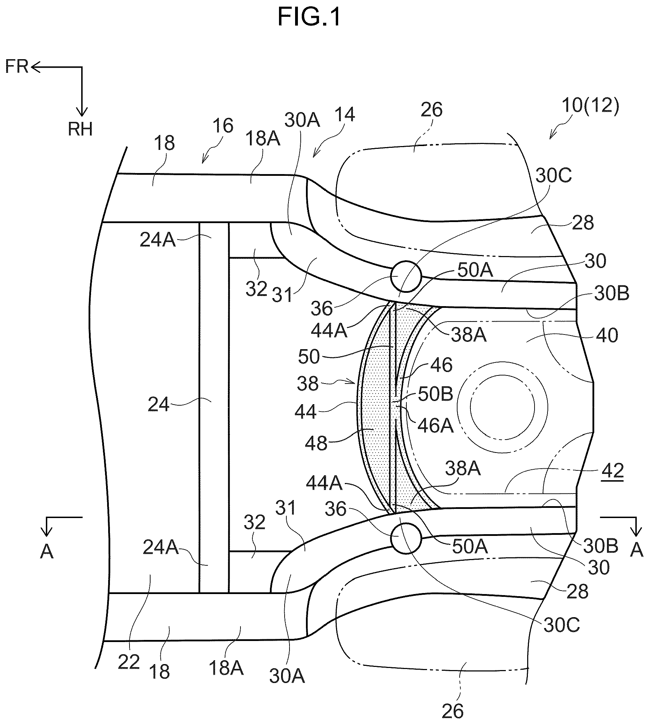

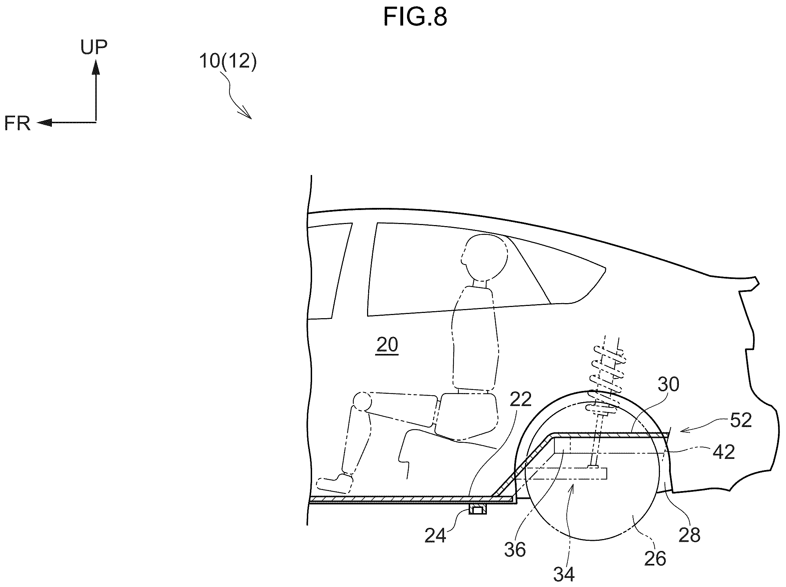

FIG. 1 is a bottom view showing a rear portion (vehicle rear portion) 14 side of a vehicle 12 to which a vehicle frame structure 10 pertaining to the embodiment has been applied as viewed from below, and FIG. 8 is a schematic cross-sectional view taken along line A-A shown in FIG. 1. It will be noted that the vehicle frame structure 10 is configured to be bilaterally symmetrical, so in the following description, there are cases where just the configuration of either one of the left and right sides is described and description of the other of the left and right sides is omitted. Furthermore, in the drawings, the same reference signs are assigned to members forming left and right pairs. Moreover, in the drawings, there are cases where some reference signs are omitted.

As shown in FIG. 1, in side portions (vehicle side portions) 16 of the vehicle 12, a left and right pair of rockers 18 extend in the vehicle front and rear direction. Between the left and right rockers 18, a floor member 22 configuring a floor of a cabin 20 (see FIG. 8) extends along the vehicle front and rear direction and the vehicle width direction. On rear end portion 18A sides of the rockers 18, a floor crossmember 24 extends along the vehicle width direction under the floor member 22 and between the left and right rockers 18.

Furthermore, on the rear side of the left and right rockers 18 are provided wheel well members 28 serving as rear wheel wells in which rear wheels 26 are disposed, and on vehicle width direction inner sides of the left and right wheel well members 28, rear side members (frame members) 30 extend in the vehicle front and rear direction.

On front end portion 30A sides of the left and right rear side members 30 are provided inclined portions 31 extending obliquely inward in the vehicle width direction heading in the vehicle rearward direction, and on the front end portions 30A of the left and right rear side members 30, connecting members 32 to which are connected the rear end portions 18A of the rockers 18 and extension direction (vehicle width direction) end portions 24A of the floor crossmember 24 are provided in the vehicle front and rear direction.

Because the floor crossmember 24 and the connecting members 32 are provided as separate members, different materials can be used for the floor crossmember 24 and the connecting members 32, and design flexibility for the connecting members 32 improves. It will be noted that the connecting members 32 are not invariably necessary, and gaps may also be provided between the front end portions 30A of the rear side members 30 and the end portions 24A of the floor crossmember 24. Furthermore, the front end portions 30A of the rear side members 30 may also be connected to the rear end portions 18A of the rockers 18 and the end portions 24A of the floor crossmember 24.

Furthermore, the left and right rear side members 30 are provided with mounting members 36 for mounting suspension members 34 (see FIG. 8). Additionally, a crossmember component 38 extends in the vehicle width direction so as to intercouple the left and right wheel well members 28 and interconnect the left and right mounting members 36 (described below). It will be noted that the crossmember component 38 is illustrated with dots to facilitate understanding of its shape.

Between the left and right rear side members 30, a rear floor panel 40 configuring the floor of a vehicle body rear portion extends in the vehicle front and rear direction and the vehicle width direction. The rear floor panel 40 configures the floor of a luggage compartment, and in the front portion side and the vehicle width direction center portion of the rear floor panel 40, a housing (a spare tire housing) 42 that opens in the vehicle upward direction and is substantially cylindrical is provided as a recess. The housing 42 can house a spare tire not shown in the drawings. It will be noted that the housing 42 is closed off by a cover provided on its upper edge portion.

In this way, the housing 42 in which the spare tire is housed is provided in the front portion side of the rear floor panel 40. For this reason, the crossmember component 38 is convexly curved in the vehicle forward direction along the shape of the housing 42.

Here, the crossmember component 38 is formed integrally with the wheel well members 28 and the rear side members 30 by, for example, aluminum die casting. In this embodiment, for example, the wheel well members 28 and the rear side members 30 have an open cross-sectional shape that opens outward in the vehicle width direction, and the crossmember component 38 has an open cross-sectional shape that opens in the vehicle downward direction.

The shape of the crossmember component 38 will now be specifically described.

For example, the cross-sectional shape of the crossmember component 38 as cut along the vehicle front and rear direction and the vehicle up and down direction has a substantially inverted U-shape. Furthermore, the crossmember component 38 is configured to include a front wall portion 44 that configures the front end portion thereof in the vehicle front and rear direction, a rear wall portion 46 that configures the rear end portion thereof in the vehicle front and rear direction, and a far wall portion 48 that interconnects upper ends of the front wall portion 44 and the rear wall portion 46. Both vehicle width direction ends of the crossmember component 38 are connected to side wall portions 30B of the rear side members 30 that extend along the vehicle front and rear direction and the vehicle up and down direction. Furthermore, the front wall portion 44 and the rear wall portion 46 of the crossmember component 38 are convexly curved in the vehicle forward direction and are provided on substantially concentric circles.

Moreover, in this embodiment, the mounting members 36 for the suspension members 34 (see FIG. 8) are provided on an extension line of the front wall portion 44 of the crossmember component 38. In other words, in this embodiment, at least parts of both extension direction (vehicle width direction) end portions 38A of the crossmember component 38 overlap the mounting members 36 as viewed from the vehicle width direction. As an example, in this embodiment specifically both vehicle width direction end portions 38A of the crossmember component 38 are connected to the pair of mounting members 36 via the side wall portions 30B of the rear side members 30 and lower wall portions 30C of the rear side members 30 that extend along the vehicle front and rear direction and the vehicle width direction.

Furthermore, inside the crossmember component 38 is provided a first rib 50 that is erected on (pendent from) the far wall portion 48 and connects both vehicle width direction end portions 44A of the front wall portion 44 of the crossmember component 38 to a vehicle width direction intermediate portion 46A of the rear wall portion 46 of the crossmember component 38 along the vehicle width direction.

Here, for example, the front wall portion 44 and the rear wall portion 46 of the crossmember component 38 are formed so as to have substantially the same height, and the first rib 50 is formed so as to have substantially the same height as the front wall portion 44 and the rear wall portion 46. For this reason, the first rib 50 has a substantially rectangular shape as viewed from the front side in the vehicle front and rear direction. It will be noted that it is not invariably necessary for the front wall portion 44 and the rear wall portion 46 of the crossmember component 38 to have the same height and, depending on the height of the front wall portion 44 and the rear wall portion 46, the shape of the first rib 50 can also be changed as appropriate.

### <Action and Effects of Vehicle Frame Structure>

Next, the action and effects of the vehicle frame structure pertaining to this embodiment will be described.

In this embodiment, the vehicle frame structure 10 shown in FIG. 1 is integrally formed by casting, and the vehicle frame structure 10 is configured to include the left and right pair of rear side members 30, the crossmember component 38, and the first rib 50. The left and right pair of rear side members 30 have the mounting members 36 to which the suspension members 34 (see FIG. 8) are mounted, and at least parts of both vehicle width direction end portions 38A of the crossmember component 38 overlap the mounting members 36 (are connected to the mounting members 36) as viewed from the vehicle width direction. Moreover, the crossmember component 38 is convexly curved in the vehicle forward direction, and the first rib 50 connects both (vehicle width direction) end portions 44A of the front wall portion 44 of the crossmember component 38 to the (vehicle width direction) intermediate portion 46A of the rear wall portion 46 of the crossmember component 38 along the vehicle width direction.

In this way, in this embodiment, because the crossmember component 38 is provided with the first rib 50 that connects both end portions 44A of the front wall portion 44 to the intermediate portion 46A of the rear wall portion 46 along the vehicle width direction, the rigidity of the crossmember component 38 itself improves, and it becomes possible to inhibit torsion of the crossmember component 38.

Furthermore, because the crossmember component 38 connected to the mounting members 36 for the suspension members 34 is provided with the first rib 50, the first rib 50 is, besides the front wall portion 44, the rear wall portion 46, and the far wall portion 48, further added as a transmission path for upward loads when the vehicle is traveling. Because of this, in this embodiment, loads transmitted to the crossmember component 38 are dispersed, and as a result it becomes possible to further inhibit torsion of the crossmember component 38.

That is, in this embodiment, torsional rigidity when the vehicle is traveling can be effectively enhanced even in the curved crossmember component 38, and handling and stability when the vehicle is traveling can be improved. Furthermore, by enhancing rigidity in the crossmember component 38, it becomes possible to obtain a sufficient yield strength with respect to loads input at the time of a side impact to the vehicle 12.

Furthermore, in this embodiment, the crossmember component 38 has an open cross-sectional shape that opens in the vehicle downward direction, and the first rib 50 extends along the vehicle width direction inside the crossmember component 38 and connects both end portions 44A of the front wall portion 44 of the crossmember component 38 to the intermediate portion 46A of the rear wall portion 46 of the crossmember component 38 along the vehicle width direction.

For this reason, in this embodiment, when upward loads act when the vehicle 12 is traveling, the open cross-sectional shape of the crossmember component 38 is inhibited from opening (e.g., the angle formed by the far wall portion 48 and the rear wall portion 46 of the crossmember component 38 is inhibited from becoming obtuse) due to distortion of the rear wall portion 46 of the crossmember component 38, thus contributing to handling and stability when the vehicle is traveling.

Moreover, in this embodiment, the front wall portion 44 and the rear wall portion 46 of the crossmember component 38 are convexly curved in the vehicle forward direction and are provided on substantially concentric circles. Furthermore, inside the crossmember component 38 is provided the first rib 50 that connects, along the vehicle width direction, both vehicle width direction end portions 44A of the front wall portion 44 to the vehicle width direction intermediate portion 46A of the rear wall portion 46 of the crossmember component 38.

In this way, in this embodiment, inside the crossmember component 38, the first rib 50 bridges both vehicle width direction end portions 44A of the front wall portion 44 to the vehicle width direction intermediate portion 46A of the rear wall portion 46 of the crossmember component 38, further improving the rigidity of the crossmember component 38 itself. Furthermore, because of this, the angles formed by the front wall portion 44 and the far wall portion 48 of the crossmember component 38 and by the rear wall portion 46 and the far wall portion 48 of the crossmember component 38 are inhibited from becoming obtuse, so the open cross-sectional shape of the crossmember component 38 can be more effectively prevented from opening.

Here, in this embodiment, the crossmember component 38 is disposed on the front side of the housing 42 provided in a vehicle lower portion 52 and is convexly curved in the vehicle forward direction to match the shape of the housing 42. In this embodiment, torsional rigidity when the vehicle is traveling can be effectively enhanced even in the curved crossmember component 38, and handling and stability when the vehicle 12 is traveling can be improved, so it becomes possible to dispose on the front side of the housing 42 the crossmember component 38 that is curved in order to avoid interference with the housing 42. Because of this, in this embodiment, it becomes possible to improve handling and stability when the vehicle is traveling and at the same time streamline the layout of the vehicle lower portion 52.

### <Example Modifications of the Embodiment>

Example modifications of the embodiment will now be described below.

### (Example Modification 1)

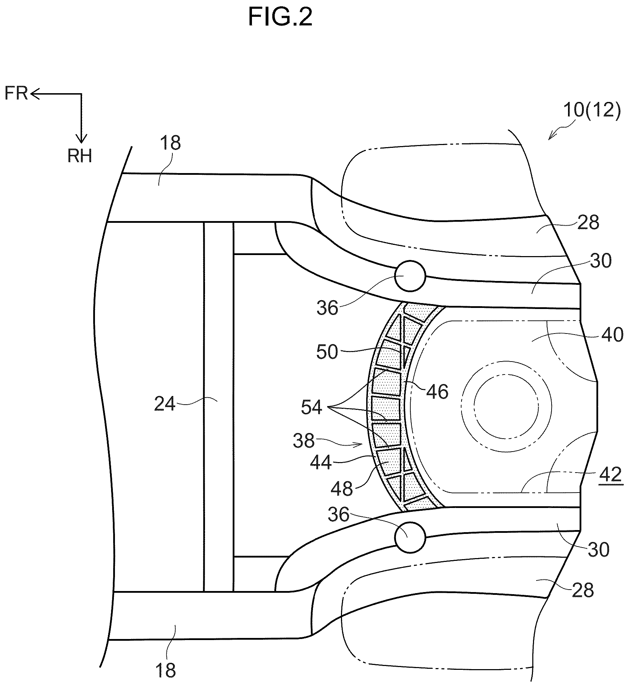

In the above embodiment, as shown in FIG. 1, the first rib 50 is provided along the vehicle width direction inside the crossmember component 38. Here, as example modification 1, as shown in FIG. 2, a plurality of second ribs 54 that interconnect the front wall portion 44 and the rear wall portion 46 of the crossmember component 38 at substantially the shortest distance therebetween may also be provided along the vehicle width direction apart from the first rib 50.

In example modification 1, the second ribs 54 interconnect the front wall portion 44 and the rear wall portion 46 of the crossmember component 38 at substantially the shortest distance therebetween, so compared with a case where the second ribs 54 are not provided, it becomes possible to inhibit deformation of the front wall portion 44 and the rear wall portion 46. In other words, in example modification 1, compared with a case where the second ribs 54 are not provided, it becomes possible to further inhibit the angles that the far wall portion 48 forms with the front wall portion 44 and the rear wall portion 46 from becoming obtuse and to more effectively prevent the open cross-section of the crossmember component 38 from opening.

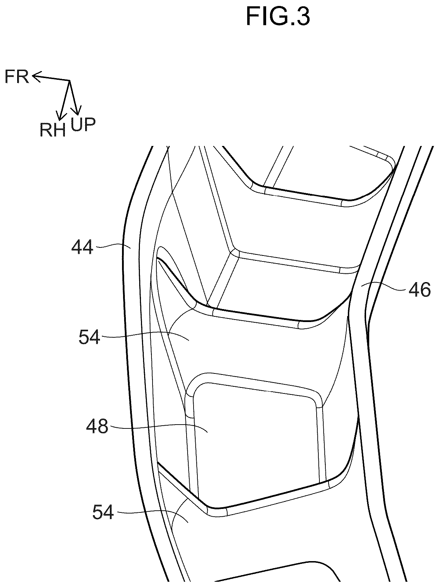

It will be noted that the second ribs 54 may be formed so as to have a height substantially even with the front wall portion 44 and the rear wall portion 46 of the crossmember component 38, or, as shown in FIG. 3, the vehicle front and rear direction center portions of the second ribs 54 may be lower than the height of the front wall portion 44 and the rear wall portion 46. It will be noted that FIG. 3 prioritizes the legibility of the second ribs 54 and thus does not show the first rib 50.

Here, when the second ribs 54 are formed so as to have a height substantially even with the front wall portion 44 and the rear wall portion 46 along the vehicle front and rear direction, it becomes possible to effectively inhibit opening of the open cross-section of the crossmember component 38. By contrast, when the height of the vehicle front and rear direction center portions of the second ribs 54 is lower than the height of the vehicle front and rear direction end portions (the front wall portion 44 sides and the rear wall portion 46 sides) of the second ribs 54, it becomes possible to improve cooling efficiency when forming the vehicle frame structure 10 compared with a case where the second ribs 54 are formed at the same height along the vehicle front and rear direction. For this reason, the height of the second ribs 54 may also be changed in accordance with their vehicle width direction positions in the crossmember component 38.

Furthermore, a plurality of the second ribs 54 may be provided across substantially the entire area of the crossmember component 38 in the vehicle width direction as shown in FIG. 2, or the second ribs 54 may be provided in parts of the crossmember component 38, such as in both vehicle width direction end portions 38A of the crossmember component 38.

### (Example Modification 2)

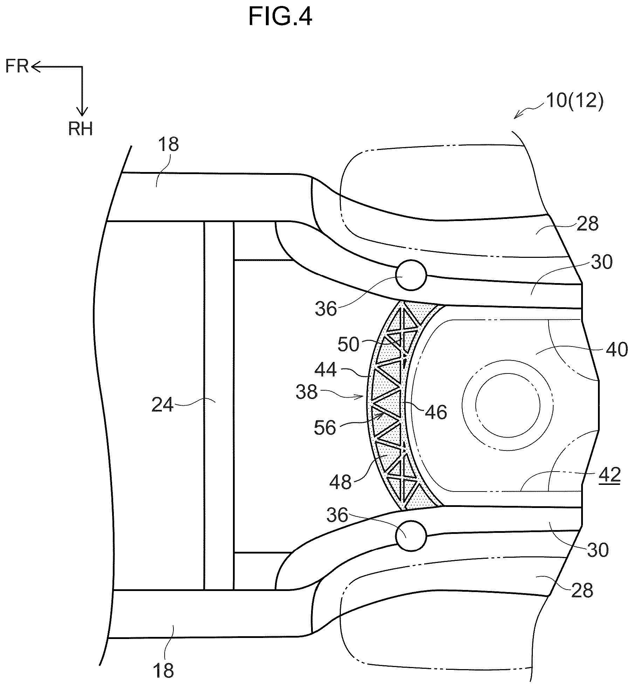

Furthermore, as example modification 2, as shown in FIG. 4, third ribs 56 that interconnect the front wall portion 44 and the rear wall portion 46 of the crossmember component 38 in the manner of a truss may be provided apart from the first rib 50. In this way, the truss-like third ribs 56 interconnect the front wall portion 44 and the rear wall portion 46 of the crossmember component 38, so compared with a case where the third ribs 56 are not provided, it becomes possible to more effectively inhibit the open cross-section of the crossmember component 38 from opening.

Furthermore, in example modification 2, because the third ribs 56 that interconnect the front wall portion 44 and the rear wall portion 46 in the manner of a truss are provided inside the crossmember component 38, it becomes possible to further improve the rigidity of the crossmember component 38 with respect to loads along the vehicle front and rear direction and to transmit, via the third ribs 56 along the vehicle width direction, an impact load input from the vehicle rear side.

It will be noted that, like the second ribs 54 (see FIG. 2), the third ribs 56 may also be formed so as to have a height substantially even with the front wall portion 44 and the rear wall portion 46 of the crossmember component 38, or the vehicle front and rear direction center portions of the third ribs 56 may be lower than the height of the front wall portion 44 and the rear wall portion 46. Furthermore, a plurality of the third ribs 56 may be provided across substantially the entire area of the crossmember component 38 in the vehicle width direction, or the third ribs 56 may be provided in parts of the crossmember component 38, such as in both vehicle width direction end portions 38A of the crossmember component 38.

Moreover, although example modification 1 and example modification 2 describe examples where the second ribs 54 and the third ribs 56 are respectively provided, a mixture of the second ribs 54 and the third ribs 56 may also be provided inside the crossmember component 38.

### (Example Modification 3)

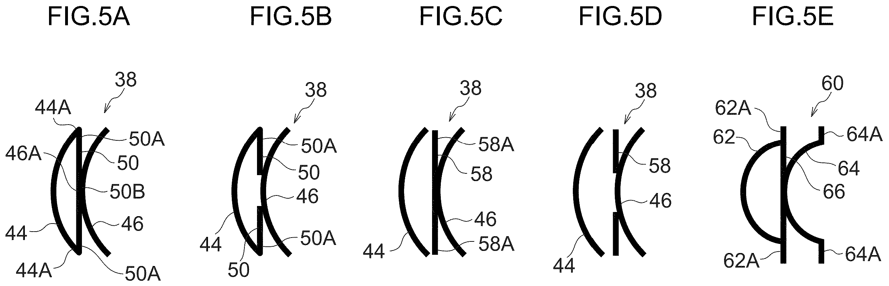

In the above embodiment, as shown in FIG. 1 and FIG. 5A, the first rib 50 provided in the crossmember component 38 is connected at both of its vehicle width direction end portions 50A to both vehicle width direction end portions 44A of the front wall portion 44. Additionally, the first rib 50 is connected at its vehicle width direction center portion 50B to the vehicle width direction intermediate portion 46A of the rear wall portion 46 of the crossmember component 38 and is formed continuously along the vehicle width direction. However, it suffices for the first rib 50 to connect the vehicle width direction end portions 38A of the crossmember component 38 to the curved rear wall portion 46 along the vehicle width direction, so it is not variably necessary for the first rib 50 to be formed continuously along the vehicle width direction. It will be noted that FIG. 5A, FIG. 5B, FIG. 5C, FIG. 5D, and FIG. 5E are bottom views schematically showing the crossmember component 38.

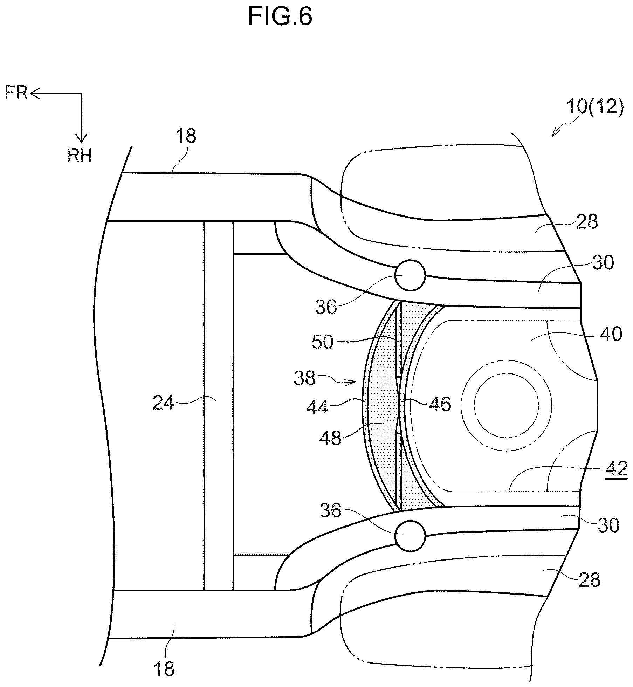

For example, as example modification 3, as shown in FIG. 6 and FIG. 5B, the first rib 50 may also be cut in the vehicle width direction on the vehicle width direction intermediate portion 46A side of the rear wall portion 46. Depending on the curvature of the front wall portion 44 and the rear wall portion 46 of the crossmember component 38, there are also cases where both end portions 44A of the front wall portion 44 and the vehicle width direction intermediate portion 46A of the rear wall portion 46 are not linearly interconnected. In such cases, cutting the first rib 50 is also possible.

It will be noted that although here the first rib 50 is formed along the vehicle width direction, it may also be formed intersecting the vehicle width direction when it connects both end portions 44A of the front wall portion 44 of the crossmember component 38 to the vehicle width direction intermediate portion 46A of the rear wall portion 46.

### (Example Modification 4)

In the embodiment and example modification 3, as shown in FIG. 5A and FIG. 5B, respectively, both vehicle width direction end portions 50A of the first rib 50 are connected to the front wall portion 44, but since it suffices for the first rib 50 to connect the end portions 38A of the crossmember component 38 to the rear wall portion 46 along the vehicle width direction, it is not invariably necessary for both end portions 50A of the first rib 50 to be connected to the front wall portion 44.

For example, as example modification 4, as shown in FIG. 5C, both vehicle width direction end portions 58A of a first rib 58 need not be connected to the front wall portion 44. In this case, for example, vertical wall portions (not shown in the drawings) extending in the vehicle front and rear direction and the vehicle up and down direction may be provided on both ends of the crossmember component 38, and the vehicle width direction end portions of the first rib 58 may be connected to the vertical wall portions.

It will be noted that in a case where the vertical wall portions are not provided, the first rib 58 may be connected to the side wall portions 30B of the rear side members 30 shown in FIG. 1. Furthermore, although here the first rib 58 is formed continuously along the vehicle width direction, as in example modification 3 the first rib 58 may also be cut in the vehicle width direction on the vehicle width direction intermediate portion 46A side of the rear wall portion 46 as shown in FIG. 5D.

### (Example Modification 5)

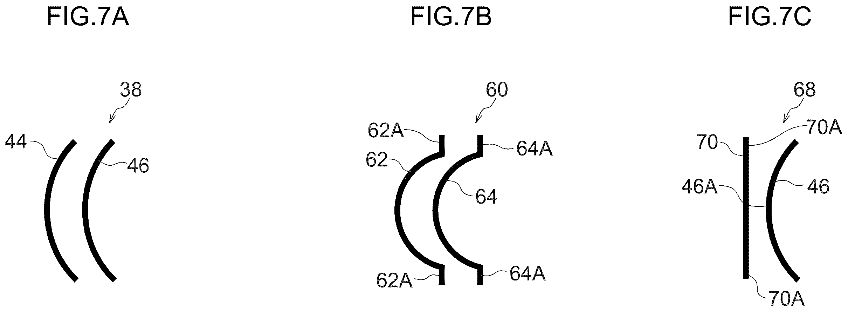

Moreover, in the above embodiment, as shown in FIG. 7A, the front wall portion 44 and the rear wall portion 46 of the crossmember component 38 are provided on substantially concentric circles and formed along substantially identical arcs, but the shape of the crossmember component 38 is not limited to this.

For example, as example modification 5, as shown in FIG. 7B, flange portions 62A and 64A extending along the vehicle width direction may be formed on both vehicle width direction end portions of a front wall portion 62 and a rear wall portion 64, respectively, of a crossmember component 60. In this case, as shown in FIG. 5E, a first rib 66 includes the flange portions 62A of the front wall portion 62 and is connected to the rear wall portion 64 of the crossmember component 60.

### (Example Modification 6)

Moreover still, in the above embodiment and example modifications, as shown in FIG. 7A and FIG. 7B, the front wall portion 44 and the rear wall portion 46 of the crossmember component 38 are convexly curved in the vehicle forward direction, but the crossmember component 38 is not limited to this because it suffices for at least the rear wall portion 46 to be convexly curved in the vehicle forward direction.

For example, as example modification 6, as shown in FIG. 7C, a front wall portion 70 of a crossmember component 68 may be formed along the vehicle width direction. It will be noted that in this case, although the drawings do not show this, the first rib may also be formed so as to connect end portions 70A of the front wall portion 70 to the vehicle width direction intermediate portion 46A of the rear wall portion 46 in a state in which the first rib is cut in the vehicle width direction. Furthermore, the first rib need not invariably be connected to the front wall portion 70, and in this case both vehicle width direction end portions of the first rib are connected to the side wall portions 30B of the rear side members 30 shown in FIG. 1.

In this disclosure, the crossmember component is formed by casting, so there is greater design flexibility compared with a case where the crossmember component is formed by extrusion, for example. For this reason, the shape of the crossmember component can be changed as appropriate to shapes other than those shown in FIG. 7A, FIG. 7B, and FIG. 7C.

### <Supplementary Information relating to the Embodiment>

Supplementary information relating to the embodiment will now be described below.

In the embodiment, the crossmember component 38 shown in FIG. 1 has an open cross-sectional shape that opens in the vehicle downward direction, but it is not limited to this and may have a shape that opens in the vehicle upward direction. In FIG. 1, the far wall portion 48 of the crossmember component 38 interconnects the upper ends of the front wall portion 44 and the rear wall portion 46. By contrast, when the crossmember component 38 has a shape that opens in the vehicle upward direction, the far wall portion 48 of the crossmember component 38 interconnects lower ends of the front wall portion 44 and the rear wall portion 46, although the drawings do not show this. In this case, the first rib 50 may be provided inside the crossmember component 38 (on the inner surface side of the far wall portion 48) or may be formed on the outer surface side of the far wall portion 48.

Furthermore, in the embodiment, the cross-sectional shape of the crossmember component 38 as cut along the vehicle front and rear direction and the vehicle up and down direction has a substantially inverted U-shape, and the crossmember component 38 has an open cross-sectional shape that opens in the vehicle downward direction, but even if the open end of the crossmember component 38 is closed off by a plate for example, that crossmember component 38 is included in the crossmember component of the disclosure as long as it has a configuration including the first rib 50.

Moreover, in the embodiment, the mounting members 36 for the suspension members 34 (see FIG. 8) are provided on an extension line of the front wall portion 44 of the crossmember component 38, but the crossmember component 38 is not limited to this because it suffices for at least parts of both end portions 38A of the crossmember component 38 to overlap the mounting members 36 as viewed from the vehicle width direction. For example, although the drawings do not show this, the mounting members 36 may be provided on an extension line of the rear wall portion 46 of the crossmember component 38, and the mounting members 36 may be provided between an extension line of the front wall portion 44 and an extension line of the rear wall portion 46.

Furthermore, in the above embodiment, an example was described where, in the vehicle frame structure 10 shown in FIG. 1, for example the left and right rear side members 30, the left and right wheel well members 28, the rear floor panel 40, and the crossmember component 38 are integrally formed by casting, but the vehicle frame structure 10 is not limited to this. For example, the wheel well members 28 and the rear floor panel 40 may be formed separately.

In this way, by making the wheel well members 28 and the rear floor panel 40 separate from the vehicle frame structure 10 in which the left and right rear side members 30 and the crossmember component 38 are integrally formed, the number of parts increases but it becomes possible to use different materials for the vehicle frame structure 10, the wheel well members 28, and the rear floor panel 40. Because of this, different manufacturing methods can be used for the vehicle frame structure 10, the wheel well members 28, and the rear floor panel 40, thus improving design flexibility.

In addition, the disclosure can be changed and implemented in various ways without departing from the scope of the claims. Furthermore, naturally the scope of rights of the disclosure is not limited to the embodiment and example modifications.

## Claims

1. A vehicle frame structure (10) integrally formed by casting, the vehicle frame structure (10) comprising:
a left and right pair of frame members (30) configured to be provided at a rear portion (14) of a vehicle (12) and at vehicle width direction side portions (16), that extend in a vehicle front-rear direction, and that each have an attachment part (36) to which a suspension member (34) is attached;
a crossmember component (38, 60, 68) that extends in a vehicle width direction, that has respective vehicle width direction end portions (38A) thereof configured to be connected to respective attachment parts (36), and that has a rear wall portion (46,64) that configures an end portion of the crossmember component (38, 60, 68) at a vehicle rear side, with at least the rear wall portion (46,64) being convexly curved in a vehicle forward direction (FR); and
a first rib (50,58,66) that connects the vehicle width direction end portions (38A) of the crossmember component (38, 60, 68) to the curved rear wall portion (46,64) along the vehicle width direction.

2. The vehicle frame structure (10) of claim 1, wherein the crossmember component (38, 60, 68) has an open cross-sectional shape that is open toward one of a vehicle upward direction or a vehicle downward direction, and the first rib (50,58,66) extends along the vehicle width direction inside the crossmember component (38, 60, 68).

3. The vehicle frame structure (10) of claim 2, wherein the first rib (50,58,66) is connected, at the vehicle width direction end portions (38A) of the crossmember component (38), to a front wall portion (44,62,70) that configures an end portion of the crossmember component (38) at the vehicle front side.

4. The vehicle frame structure (10) of claim 3, wherein the first rib (50,58,66) is formed continuously along the vehicle width direction, is connected at both vehicle width direction end portions (38A) thereof to the front wall portion (44,62,70), and is connected at a vehicle width direction intermediate portion (46A) thereof to the rear wall portion (46,64).

5. The vehicle frame structure (10) of any one of claims 1 to 4, wherein a plurality of second ribs (54) that interconnect a front wall portion (44,62,70) configuring an end portion of the crossmember component (38, 60, 68) at the vehicle front side and the rear wall portion (46,64) at substantially the shortest distance therebetween, are provided along the vehicle width direction.

6. The vehicle frame structure (10) of any one of claims 1 to 5, wherein third ribs (56) are provided that interconnect a front wall portion (44,62,70) configuring an end portion of the crossmember component (38, 60, 68) at the vehicle front side and the rear wall portion (46,64) in a truss arrangement.

7. The vehicle frame structure (10) of claim 5, wherein vehicle front-rear direction center portions of the second ribs (54) are lower than respective vehicle front-rear direction end portion sides of the second ribs (54).

8. The vehicle frame structure of any one of claims 1 to 7, wherein the crossmember component (38, 60, 68) is configured to be disposed at a front side of a spare tire housing (42) provided in a lower portion of the vehicle (12).
